(19) Europäisches Patentamt

**European Patent Office**

**Office européen des brevets**

(11) Veröffentlichungsnummer: **0 367 949 B1**

(12) **EUROPÄISCHE PATENTSCHRIFT**

(45) Veröffentlichungstag der Patentschrift: **19.05.93**

(21) Anmeldenummer: **89117088.8**

(22) Anmeldetag: **15.09.89**

(51) Int. Cl.⁵: **B60G 17/08**, F16F 9/46, B60G 17/015

(54) **Federungssystem für Fahrzeuge.**

(30) Priorität: **08.11.88 DE 3837863**

(43) Veröffentlichungstag der Anmeldung:
**16.05.90 Patentblatt 90/20**

(45) Bekanntmachung des Hinweises auf die Patenterteilung:
**19.05.93 Patentblatt 93/20**

(84) Benannte Vertragsstaaten:
**FR GB IT SE**

(56) Entgegenhaltungen:
**EP-A- 0 197 316    EP-A- 0 262 886**
**DE-A- 3 408 292    DE-A- 3 610 937**
**FR-A- 2 560 325    FR-A- 2 562 844**
**GB-A- 942 328    GB-A- 1 450 765**
**US-A- 3 255 850**

(73) Patentinhaber: **DAIMLER-BENZ AKTIENGE-SELLSCHAFT**
**Mercedesstrasse 136**
**W-7000 Stuttgart 60(DE)**

(72) Erfinder: **Schützner, Paul, Dr.**
**Hellerweg 58/4**
**W-7300 Esslingen(DE)**
Erfinder: **Fritz, Martin**
**Waldenstein 25**
**W-7062 Rudersberg(DE)**

EP 0 367 949 B1

## Beschreibung

Die Erfindung betrifft ein Federungssystem für Fahrzeuge, mit zur Beeinflussung der Fahrzeuglage radweise unabhängig voneinander veränderbaren Stützkräften, zu deren Veränderung an den Fahrzeugrädern zugeordneten Dämpfern die Differenz zwischen den Dämpfungskoeffizienten in der Zug- und Druckstufe (radweise) gesteuert wird, wobei die Dämpfer ausgebildet sind als doppeltwirkende hydraulische Teleskopstoßdämpfer mit einem Zylinder sowie einem darin verschiebbar geführten, den Zylinder unterteilenden Kolben mit einseitig angeordneter Kolbenstange und mit einer den kolbenstangenseitigen einen Raum des Zylinders mit dem auf der anderen Seite des Kolbens liegenden anderen Raum des Zylinders verbindenden Leitung, an der eine Rückschlagventilanordnung angeordnet ist, welche (im wesentlichen) nur eine Strömung vom anderen Raum in den einen Raum zuläßt, und mit einem Hydraulikreservoir, das mit dem einen Raum über eine steuerbare Servo- bzw. Proportionalventilanordnung und mit dem anderen Raum über eine weitere Rückschlagventilanordnung verbunden ist, welche (im wesentlichen) nur eine Strömung vom Reservoir in den anderen Raum zuläßt.

Ein derartiges Federungssystem, welches aus der EP − A − 01 97 316 grundsätzlich bekannt ist, stellt ein sogenanntes semiaktives System dar, bei dem die Hubbewegungen der Räder relativ zum Fahrzeugaufbau in Verbindung mit der Steuerung der Dämpfungskoeffizienten in der Zug- und Druckstufe der Dämpfer zur Erzeugung variabler Stützkräfte herangezogen werden. Auf diese Weise können die Stützkräfte praktisch leistungsfrei verändert werden, denn der Energieaufwand zur Steuerung der Dämpfer ist vergleichsweise gering.

Charakteristisch für ein derartiges semiaktives System ist, daß bei jeder Hubbewegung der Räder mehr oder weniger Energie vernichtet wird; dagegen ist es nicht möglich, dem System zusätzliche Energie zuzuführen.

Derartiges ist bei aktiven Federungssystemen möglich, die beispielsweise gemäß der DE − A − 34 08 292 bekannt sind. Hier werden die Abstützkräfte mittels einer Steuervorrichtung − soweit notwendig unter Zufuhr von Energie − schnell verändert, um den Fahrzeugaufbau immer in einer Sollage zu halten bzw. in dieselbe zu drängen. Derartige Systeme zeichnen sich prinzipiell durch eine große Flexibilität aus, wobei gemäß der bereits erwähnten DE − A − 34 08 292 ein sehr komfortables Fahrverhalten gewährleistet werden kann, weil trotz einer unter Umständen sehr weichen Abstimmung der Federung gegebenenfalls auftretenden Wank- oder Nickbewegungen des Fahrzeugaufbaus nachhaltig entgegengewirkt werden kann.

Der prinzipielle Nachteil solcher aktiven Systeme liegt jedoch darin, daß für die Abstützung des Fahrzeugaufbaus erhebliche Leistungen benötigt werden. Darüber hinaus ist auch ein großer Regelungsaufwand erforderlich. Gegebenenfalls läßt sich zwar der Leistungsbedarf dieser Systeme dadurch vermindern, daß parallel zu den Abstützaggregaten passive Federelemente angeordnet sind, welche im wesentlichen die statischen Abstützkräfte aufbringen, so daß die Abstützaggregate vor allem zum Ausgleich dynamischer Kräfte beim Fahrbetrieb dienen. Der Regelungsaufwand kann jedoch auf diese Weise nicht vermindert werden, vielmehr müssen noch zusätzlich die je nach Hubstellung der Räder unterschiedlichen Kräfte der passiven Federelemente berücksichtigt werden.

Im übrigen bleibt auch bei solchen Systemen der Leistungsbedarf deutlich höher als bei den oben erwähnten semiaktiven Systemen.

Im übrigen sind bereits Fahrzeuge im Einsatz, bei denen die Dämpferabstimmung in Abhängigkeit von der Fahrgeschwindigkeit bzw. von sonstigen Parametern oder auch manuell verändert werden kann. Auf diese Weise besteht die Möglichkeit, bei langsamer Fahrt eine sehr weiche und komfortbetonte Dämpfereinstellung vorzunehmen, während bei hoher Geschwindigkeit eine straffe Einstellung der Dämpfer vorgenommen wird.

Aufgabe der Erfindung ist es nun, eine vorteilhafte Konstruktion für ein Federungssystem der eingangs angegebenen Art aufzuzeigen.

Hierzu ist erfindungsgemäß vorgesehen, daß die Servo- bzw. Proportionalventilanordnung zwei parallele Leitungszweige, in denen jeweils ein steuerbares Ventil liegt, mit einer dieselben steuernden Umschaltventilanordnung aufweist, welche zwischen zwei Stellungen umschaltbar ist, in denen entweder der eine oder der andere Leitungszweig geschlossen und der jeweils verbleibende Leitungszweig geöffnet ist.

Hierbei kann gemäß einer zweckmäßigen Ausführungsform der Erfindung insbesondere vorgesehen sein, daß die Umschaltventilanordnung einen kolbenartigen Steuerschieber besitzt, welcher vom Druck im einen Zylinderraum in Richtung seiner einen und vom Druck im anderen Zylinderraum in Richtung seiner anderen Stellung beaufschlagt wird.

Bei der erfindungsgemäßen Anordnung wird jeder der beiden Leitungszweige jeweils in einer Richtung durchströmt, die von der kolbenstangenseitigen Zylinderkammer zum Hydraulikreservoir führt. Wenn nun die Servo- bzw. Proportionalventilanordnung beim Druck- und Zughub unterschiedlich gesteuert wird, so können beim Auftreten hochfrequenter kurzhubiger Federungshübe des dem Dämpfer jeweils zugeordneten Rades unterschiedliche, auf den Fahrzeugaufbau einwirkende mittlere Kräfte erzeugt werden. In diesem Zusammenhang sind die beiden parallelen Leitungszweige vorteilhaft, weil dadurch eine schnelle Umsteuerung zwischen verschiedenen Dämpfungswiderständen der Servo- bzw. Proportionalventilanordnung möglich wird.

Die Erfindung beruht auf der Tatsache, daß sich mit Dämpfern, die in Zug- und Druckrichtung unterschiedliche Dämpfungskoeffizienten aufweisen, resultierende Kräfte in einer Richtung erzeugen lassen, wenn der Dämpfer in schneller Folge abwechselnd in Zug- und Druckrichtung bewegt wird. Dabei gilt für die durchschnittliche Kraft $\bar{F}$ am Dämpfer:

$$\bar{F} = \bar{v}_D \cdot D_D - \bar{v}_Z \cdot D_Z \qquad (I)$$

Hierbei sind

$D_D$ = Dämpfungskoeffizient in Druckrichtung

$D_Z$ = Dämpfungskoeffizient in Zugrichtung

$\bar{v}_D$ = durchschnittliche Relativgeschwindigkeit der Dämpferelemente (z.B. Kolben und Zylinder) in Druckrichtung

$\bar{v}_Z$ = durchschnittliche Relativgeschwindigkeit der Dämpferelemente in Zugrichtung.

Durch Veränderung der Dämpfungskoeffizienten für Zug- und Druckrichtung lassen sich unterschiedliche, auf den Fahrzeugaufbau wirkende Kräfte erzeugen, weil die Räder eines Fahrzeuges auch auf guten Fahrbahnen relativ kurzhubige und hochfrequente Federungshübe ausführen, die durch Rauhigkeiten der Fahrbahnoberfläche hervorgerufen werden. Wenn z.B. an der Vorderachse andere Differenzen der Dämpfungskoeffizienten eingestellt werden als an der Hinterachse bzw. wenn die Differenzen der Dämpfungskoeffizienten auf einer Fahrzeugseite von den entsprechenden Differenzen auf der anderen Fahrzeugseite abweichen, so lassen sich auf den Fahrzeugaufbau einwirkende Drehmomente bezüglich der Fahrzeugquerachse bzw. der Fahrzeuglängsachse erzeugen, d.h. durch Veränderung der Differenzen der Dämpfungskoeffizienten kann Wank- und Nickbewegungen des Fahrzeugaufbaues entgegengewirkt werden.

Die Erfindung nutzt also unvermeidbare hochfrequente Federungshübe der Fahrzeugräder dazu aus, Stellkräfte zu erzeugen, die den Fahrzeugaufbau in einer Sollage halten bzw. in dieselbe drängen.

Ein besonderer Vorzug der Erfindung liegt darin, daß die Steuerung der Dämpfer praktisch leistungsfrei erfolgen kann. Darüber hinaus können in einfacher Weise gute Notlaufeigenschaften im Falle eines Ausfalles der Steuervorrichtung gewährleistet werden. Die Steuerorgane der Dämpfer müssen dazu lediglich so ausgebildet sein, daß sie im Falle einer Fehlfunktion der Steuervorrichtung die Dämpfer automatisch und zwangsläufig auf eine Einstellung mit hohen Dämpfungskoeffizienten bringen.

Im Hinblick auf einen geringen Regelungsaufwand ist zweckmäßig, daß die Steuervorrichtung ein Maß für die Wank- bzw. Nickwinkel ermittelt, indem die Differenz zwischen den Mittelwerten der Hubstellungen der Vorder- und Hinterräder bzw. die Differenz zwischen den Mittelwerten der Hubstellungen der Räder auf einer Fahrzeugseite sowie der Räder auf der anderen Fahrzeugseite bestimmt werden. Auf diese Weise lassen sich ohne größeren Aufwand aufbaubezogene Lagekoordinaten ermitteln.

Im übrigen wird hinsichtlich bevorzugter Merkmale der Erfindung auf die Ansprüche sowie die nachfolgende Erläuterung bevorzugter Ausführungsbeispiele anhand der Zeichnung verwiesen.

Dabei zeigt

Fig. 1 eine erste Ausführungsform eines hydraulischen Teleskopstoßdämpfers, bei dem die Differenz zwischen den Dämpfungskoeffizienten für den Druckhub einerseits und den Zughub andererseits einstellbar bzw. veränderbar ist,

Fig. 2 eine abgewandelte Ausführungsform und

Fig 3 ein schematisiertes Gesamtbild des erfindungsgemäßen Federungssystems.

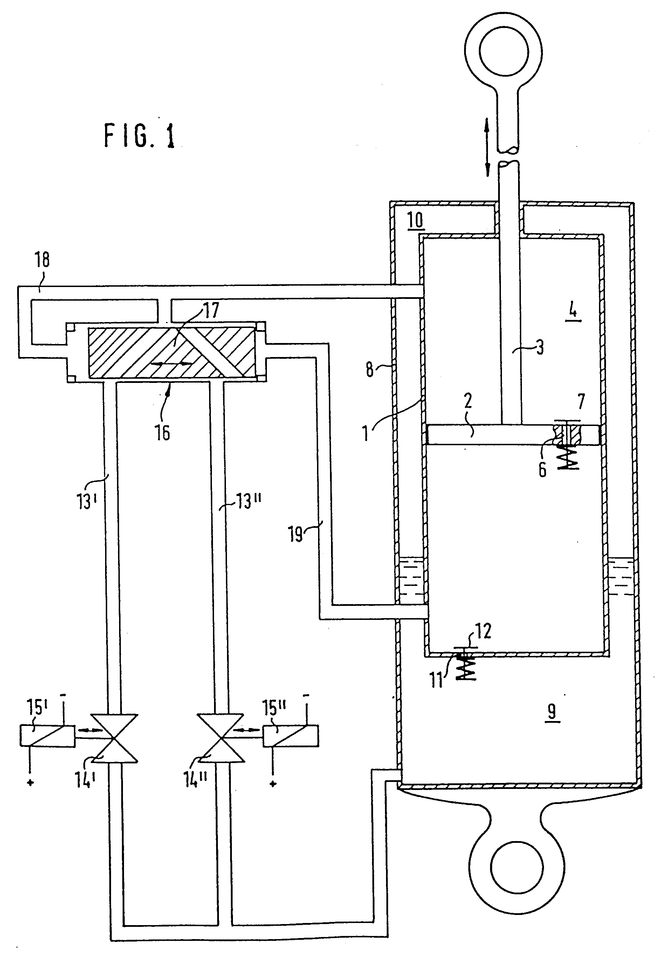

Bei dem in Fig. 1 dargestellten hydraulischen Teleskopstoßdämpfer ist in einem ersten Zylinder 1 ein Kolben 2 mit einer einseitig angeordneten Kolbenstange 3, welche einen Boden des Zylinders 1 durchsetzt, gleitverschiebbar geführt. Der Kolben 2 trennt im Zylinder 1 einen kolbenstangenseitigen Raum 4 von einem Raum 5 ab, welcher auf der von der Kolbenstange 3 abgewandten Seite des Kolbens 2 verbleibt. Die Räume 4 und 5 im Zylinder 1 sind miteinander über eine den Kolben 2 durchsetzende Leitung 6 verbunden, welche durch ein Rückschlagventil 7 gesteuert wird, derart, daß nur eine Strömung vom Raum 5 in den Raum 4 möglich ist. Die Räume 4 und 5 sind mit hydraulischem Medium, in der Regel Hydrauliköl, ausgefüllt.

Der Zylinder 1 wird von einem damit fest verbundenen weiteren Zylinder 8 umschlossen, dessen in Fig. 1 unterer Bereich ein Reservoir 9 für Hydraulikmedium bzw. Hydrauliköl bildet und dessen oberer Bereich 10 ein unter Druck stehendes pneumatisches Medium aufnimmt. Gegebenenfalls können das Reservoir 9 und der obere Bereich 10 voneinander durch eine nicht dargestellte Membran getrennt werden.

Der Raum 5 des Zylinders 1 ist mit dem Reservoir 9 über eine den in Fig. 1 unteren Boden des Zylinders 1 durchsetzende Leitung 11 verbunden, in der ein Rückschlagventil 12 angeordnet ist, derart, daß nur eine Strömung vom Reservoir 9 in den Raum 5 möglich ist.

Der kolbenstangenseitige Raum 4 des Zylinders 1 ist mit dem Reservoir 9 über eine Leitung mit zwei parallelen Leitungszweigen 13' und 13" verbunden, die durch zwei separate Servo - bzw. Proportionalventile 14' und 14" gesteuert werden, denen jeweils eigene Stellmotore 15' und 15" zugeordnet sind. Diese Stellmotoren arbeiten mit sehr kurzen Einstellzeiten (20 ms und weniger).

Von den Leitungszweigen 13' und 13" ist jeweils nur einer mit dem kolbenstangenseitigen Raum 4 des Zylinders 1 verbunden. Dies wird durch ein Umschaltventil 16 bewirkt.

Das Umschaltventil 16 besitzt einen Ventilschieber 17, welcher in einem Ventilgehäuse nach Art eines Kolbens verschiebbar angeordnet ist und von einer nicht dargestellten Feder in seine linke Endlage gedrängt wird. Der Ventilschieber 17 wird auf seiner einen Stirnseite über eine Leitung 18 mit Hydraulikmedium beaufschlagt, dessen Druck vom Druck im kolbenstangenseitigen Raum 4 des Zylinders 1 abhängt. Die andere Stirnseite des Schiebers 17 wird über eine Leitung 19 mit Hydraulikmedium beaufschlagt, dessen Druck im wesentlichen dem Druck im Raum 5 des Zylinders 1 entspricht. Beim Druckhub des Kolbens 2 wird der Schieber 17 von der vorgenannten Feder in seine nicht dargestellte linke Endlage geschoben, bei der der Leitungszweig 13' vom Umschaltventil 16 abgesperrt wird, während der Leitungszweig 13" geöffnet wird. Beim Zughub des Kolbens 2 tritt im kolbenstangenseitigen Raum 4 und damit in der Leitung 18 ein deutlich höherer Druck als im Raum 5 des Zylinders 1 und damit in der Leitung 19 auf. Dementsprechend wird der Schieber 17 beim Zughub des Kolbens 2 in die dargestellte rechte Endlage geschoben, bei der der Leitungszweig 13' geöffnet und der Leitungszweig 13" gesperrt ist.

Somit bewirkt also das Umschaltventil 16, daß beim Zughub jeweils der Leitungszweig 13' eingeschaltet bzw. wirksam wird. Durch entsprechende Einstellung der Servo - bzw. Proportionalventile 14' und 14" kann dann wiederum erreicht werden, daß einer Bewegung des Kolbens 2 beim Druckhub ein anderer Widerstand entgegenwirkt als beim Zughub.

Durch die separat einstellbaren Servo - bzw. Proportionalventile 14' und 14" lassen sich dabei die jeweiligen Widerstände sowie deren Differenzen weitestgehend beliebig verändern.

Sowohl beim Druckhub (Bewegung des Kolbens 2 in Fig. 1 nach unten) als auch beim Zughub (Bewegung des Kolbens 2 in Fig. 1 nach oben) wird der jeweils vom Umschaltventil 16 freigegebene Leitungszweig 13' bzw. 13" vom Hydraulikmedium in Richtung zum Reservoir 9 hin durchströmt. Beim Druckhub vermindert sich nämlich das Gesamtvolumen der Räume 4 und 5 des Zylinders 1, weil die Kolbenstange 3 zunehmend in den Zylinder 1 eintritt. Da das Rückschlagventil 12 eine Strömung vom Raum 5 unmittelbar in das Reservoir 9 verhindert, kann das beim Druckhub aus den Räumen 4 und 5 verdrängte hydraulische Medium nur über einen der Leitungszweige 13' bzw. 13" aus dem Zylinder 1 austreten.

Beim Zughub verhindert das Rückschlagventil 7, daß aus dem Raum 4 verdrängtes hydraulisches Medium unmittelbar über die Leitung 6 in den Raum 5 des Zylinders 1 gelangt. Vielmehr wird das aus dem kolbenstangenseitigen Raum 4 verdrängte hydraulische Medium wiederum über einen der Leitungszweige 13' bzw. 13" in das Reservoir 9 befördert. Gleichzeitig kann aus dem Reservoir 9 Hydraulikmedium über das in dieser Strömungsrichtung öffnende Rückschlagventil 12 in den Raum 5 des Zylinders 1 eintreten.

Durch entsprechende Einstellung der Servo - bzw. Proportional ventilanordnung 14',14" läßt sich erreichen, daß der dargestellte Teleskopstoßdämpfer dem Zughub einen anderen Widerstand entgegensetzt als dem Druckhub. Wenn nun der Kolben 2 in schneller Folge hin - und hergeschoben wird, beispielsweise durch schnelle Federungshübe der mit der Kolbenstange 3 verbundenen Achse eines Fahrzeuges, während der Zylinder 1 bzw. der damit fest verbundene Zylinder 8 festgehalten werden, beispielsweise am Aufbau eines Fahrzeuges, so wird auf den Zylinder 1 bzw. den Zylinder 8 oder den damit verbundenen Aufbau des Fahrzeuges eine resultierende Kraft in einer Richtung ausgeübt, deren Größe sich gemäß der oben angegebenen Gleichung I berechnen läßt. Da die jeweilige Einstellung der Servo - bzw. Proportionalventilanordnung 14', 14" die Dämpfungskoeffizienten $D_Z$ bzw. $D_D$ bestimmt, wird also durch die für Druck - und Zughub unterschiedliche Einstellung der Servo - bzw. Proportionalventilanordnung 14',14" die resultierende Kraft $\bar{F}$ bestimmt.

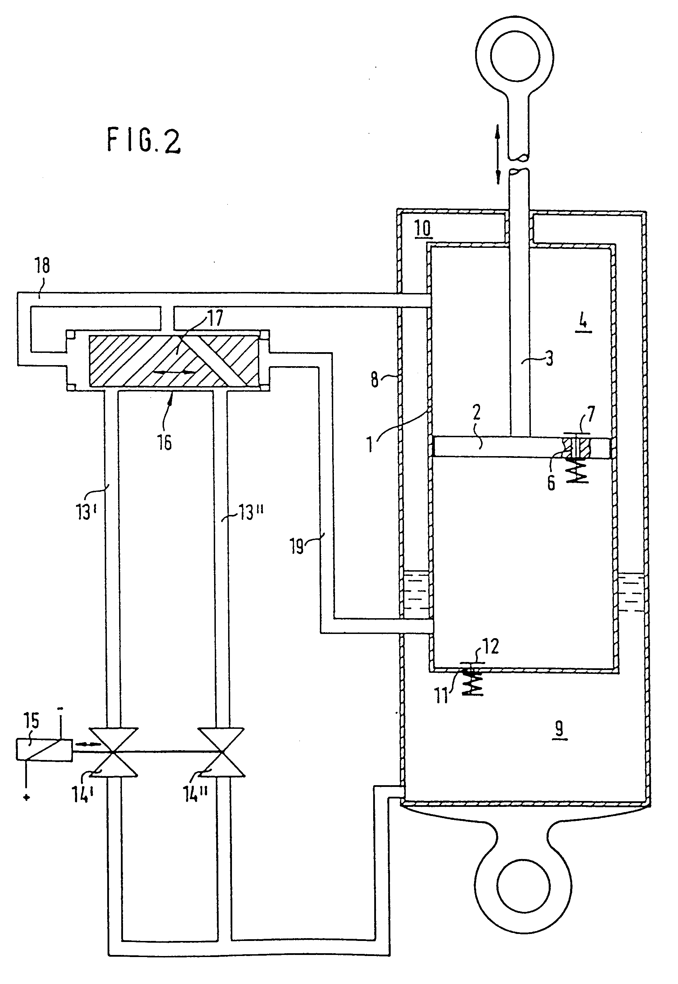

Die in Fig. 2 dargestellte Ausführungsform unterscheidet sich von derjenigen nach Fig. 1 im wesentlichen nur dadurch, daß die Servo - bzw. Proportionalventile 14' und 14" antriebsmäßige miteinander gekoppelt und durch einen einzigen schnellen Stellmotor 15 antreibbar sind. Dabei ist die antriebsmäßige Kopplung der Servo - bzw. Proportionalventile 14' und 14" derart ausgebildet, daß bei Erhöhung des Drosselwiderstandes des einen Ventiles (beispielsweise 14') der Drosselwiderstand des anderen Ventiles (beispielsweise 14") vermindert wird. Die Ventile 14' und 14" sind also gegenläufig miteinander antriebsgekoppelt

Dementsprechend läßt sich also wiederum die Differenz der Dämpfungskoeffizienten, welche beim Druckhub sowie beim Zughub des Kolbens 2 wirksam sind, beliebig verändern.

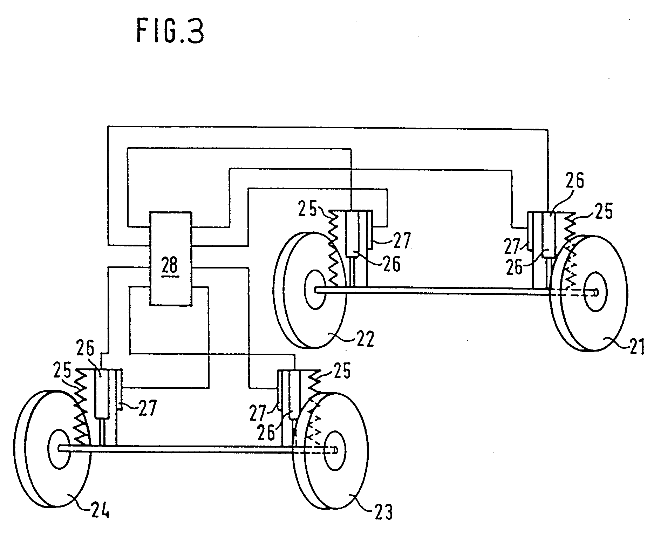

Das in Fig. 3 schematisiert dargestellte Kraftfahrzeug besitzt die Vorderräder 21 und 22 sowie die Hinterräder 23 und 24. Jedem der Räder 21 bis 24 bzw. der jeweiligen Radaufhängung ist ein Federelement 25 zugeordnet, im Beispiel der Fig. 3 eine Schraubenfeder. Diese Federelemente 25 stützen den nicht dargestellten Fahrzeugaufbau auf den jeweiligen Rädern 21 bis 24 bzw. den zugeordneten Enden von Vorder- und Hinterachse ab.

Jedem Federelement 25 ist ein hydraulischer Teleskopstoßdämpfer 26 parallelgeschaltet. Diese Stoßdämpfer 26 sind entsprechend den Figuren 1 oder 2 ausgebildet und ebenso Wie die Federelemente 25 zwischen dem Fahrzeugaufbau und den Rädern 21 bis 24 bzw. deren Radaufhängungen angeordnet.

Des weiteren ist jedem der Räder 21 bis 24 ein Hubgeber 27 zugeordnet, dessen Signale die jeweilige Hubstellung des zugeordneten Rades relativ zum Fahrzeugaufbau wiedergeben. Die Hubgeber 27 sind mit der Eingangsseite einer Steuervorrichtung 28 verbunden, die ausgangsseitig an die Teleskopstoßdämpfer 26 bzw. an deren Stellmotore 15, 15' bzw. 15" (vgl. die Figuren 1 und 2) angeschlossen ist, d.h. die Dämpfungskoeffizienten der Teleskopstoßdämpfer 26 werden von der Steuervorrichtung 28 in Abhängigkeit von den Signalen der Hubgeber 27 verändert.

Das in Fig. 3 dargestellte Federungssystem arbeitet wie folgt:
Aufgrund von Unebenheiten und Rauhigkeiten der Fahrbahn führen die Räder 21 bis 24 relativ hochfrequente Hubbewegungen relativ zum Fahrzeugaufbau aus. Die Frequenz dieser Bewegungen liegt typischerweise im Bereich um 10 Hz. Diese Bewegungen der Räder 21 bis 24 sind sehr kurzhubig.

Darüber hinaus führt der Fahrzeugaufbau aufgrund von größeren Fahrbahnunebenheiten und sonstigen Störeinflüssen, wie z.B. Seitenwind od.dgl., relativ großhubige Bewegungen mit niedriger Frequenz aus, welche typischerweise im Bereich von 1 Hz liegt.

Die Steuervorrichtung 28 bildet aus den Signalen der Hubgeber 27 zeitliche Mittelwerte, um die Art der in der Regel langhubigen Aufbaubewegungen mit der geringen Frequenz zu bestimmen.

Indem der zeitliche Mittelwert sämtlicher Hubgebersignale bestimmt wird, läßt sich erkennen, inwieweit der Fahrzeugaufbau relativ zu den Rädern 21 bis 24 bzw. zu einer die Zentren der Räder 21 bis 24 enthaltenden Ebene Hubbewegungen in Auf- oder Abwärtsrichtung ausführt. Diesen Hubbewegungen kann dann durch Veränderung der Dämpfungskoeffizienten der Teleskopstoßdämpfer 26 entgegengewirkt werden. Dabei klingen die Hubbewegungen mit niedriger Frequenz um so schneller ab, je höher die Dämpfungskoeffizienten sind.

Darüber hinaus lassen sich mittels der Teleskopstoßdämpfer 26 noch zusätzliche Kräfte erzeugen, die den Hubbewegungen entgegenrichtet sind. Bei den erfindungsgemäßen Teleskopstoßdämpfern 26 läßt sich nämlich die Differenz der Dämpfungskoeffizienten für Druck- und Zughub verändern. Aufgrund der ständigen hochfrequenten kurzhubigen Schwingungen der Räder 21 bis 24 wirkt dann zwischen den Rädern und dem Aufbau eine zusätzliche Kraft, deren Maß von der Größe der Differenz der Dämpfungskoeffizienten und deren Richtung davon abhängt, ob der Dämpfungskoeffizient für Druckhub größer oder kleiner ist als der Dämpfungskoeffizient für den Zughub. Somit besteht also grundsätzlich die Möglichkeit, durch entsprechende Einstellung der Teleskopstoßdämpfer 26 Zusatzkräfte zu erzeugen, die den jeweiligen Hubbewegungen des Fahrzeugaufbaues entgegenwirken.

Des weiteren bestimmt die Steuervorrichtung 28 ständig einen zeitlichen Mittelwert der Signale der Hubgeber 27 an den Vorderrädern 21 und 22 sowie einen Mittelwert der Signale der Hubgeber 27 an den Hinterrädern 23 und 24. Das Maß der Differenz dieser beiden Mittelwerte gibt dem jeweiligen Nickwinkel des Fahrzeugaufbaues relativ zu einer die Zentren der Räder 21 und 24 enthaltenden Ebene wieder. Auf diese Weise kann die Steuervorrichtung 28 "feststellen", ob der Fahrzeugaufbau Nickbewegungen ausführt bzw. welchen Richtungssinn die jeweilige Nickbewegung gerade hat.

Grundsätzlich ist es nun möglich, den Nickbewegungen dadurch verstärkt entgegenzuwirken, daß die Dämpfungskoeffizienten der Teleskopstoßdämpfer 26 erhöht werden.

Zusätzlich oder alternativ kann den Nickbewegungen auch dadurch entgegengewirkt werden, daß an den Teleskopstoßdämpfern 26 der Vorderräder 21 und 22 andere Differenzen für die Dämpfungskoeffizienten bei Druckhub und Zughub als bei den Stoßdämpfern 26 der Hinterräder 23 und 24 eingestellt werden. Aufgrund der ständigen hochfrequenten Schwingungen der Räder 21 bis 24 bewirken die so unterschiedlich eingestellten Differenzen, daß zwischen den Vorderrädern 21 und 22 und dem Fahrzeugaufbau einerseits und den Hinterrädern 23 und 24 und dem Fahrzeugaufbau andererseits unterschiedliche Zusatzkräfte wirksam sind; dies ist gleichbedeutend damit, daß die Zusatzkräfte ein Drehmoment bezüglich der Fahrzeugquerachse auf den Fahrzeugaufbau ausüben. Durch entsprechende Einstellung der Teleskopstoßdämpfer 26 läßt sich nun erreichen, daß dieses Drehmoment der jeweiligen Nickbewegung des Fahrzeuges entgegenwirkt.

Des weiteren bestimmt die Steuervorrichtung 28 jeweils zeitliche Mittelwerte der Signale der Hubgeber 27 der rechten Räder 21 und 23 sowie entsprechende Mittelwerte der Hubgeber 27 der linken Räder 22 und 24. Die Differenz dieser Mittelwerte ist ein Maß für den jeweiligen Wankwinkel des Fahrzeugaufbaues relativ zu einer die Radzentren enthaltenden Ebene. Im übrigen kann die Steuervorrichtung 28 durch ständige Bestimmung der genannten Differenz "erkennen", in welcher Richtung Wankbewegungen des Fahrzeugaufbaues auftreten.

Den Wankbewegungen kann nun in prinzipiell gleicher Weise wie den Nickbewegungen entgegengewirkt werden. Einerseits besteht die Möglichkeit, die Wankbewegungen dadurch schnell abklingen zu lassen, daß die Dämpfungskoeffizienten der Teleskopstoßdämpfer 26 erhöht werden. Zusätzlich bzw. alternativ besteht die Möglichkeit, an den Teleskopstoßdämpfern 26 der rechten Räder 21 und 23 eine andere Differenz zwischen den Dämpfungskoeffizienten für Druckhub und Zughub der Teleskopstoßdämpfer 26 als an den linken Rädern 23 und 24 einzustellen. Damit lassen sich aufgrund der ständigen hochfrequenten Schwingungen der Räder 21 bis 24 Zusatzkräfte erzeugen, die ein Drehmoment bezüglich der Fahrzeuglängsachse auf den Fahrzeugaufbau ausüben. Durch entsprechende Steuerung der Teleskopstoßdämpfer 26 läßt sich dann erreichen, daß dieses Drehmoment den jeweiligen Wankbewegungen entgegenwirkt und dieselben damit besonders schnell abklingen läßt.

Zusammenfassend ist also festzustellen, daß bei dem erfindungsgemäßen System nicht nur das Maß der Dämpfungskoeffizienten der Teleskopstoßdämpfer 26 veränderbar ist. Vielmehr läßt sich an jedem Teleskopstoßdämpfer 26 auch die Differenz der Dämpfungskoeffizienten für Druckhub und Zughub des jeweiligen Stoßdämpfers 26 verändern, um die hochfrequenten Schwingungsbewegungen des jeweiligen Rades relativ zum Aufbau zur Erzeugung einer Zusatzkraft ausnutzen zu können, die auf den Aufbau einwirkt und bei entsprechender Steuerung unerwünschten Aufbaubewegungen entgegenwirkt.

Die oben beschriebenen Teleskopstoßdämpfer 26 sind nur in etwa vertikaler Stellung arbeitsfähig, wobei im allgemeinen die Kolbenstange 3 mit dem Aufbau und die Zylinder 1 und 8 mit dem Achskörper des Fahrzeuges verbunden sind.

Die Stellmotoren 15 bzw. die Ventile 14, 14' und 14" werden mittels einer Steuervorrichtung betätigt, welche die tatsächliche Lage des Fahrzeugaufbaus relativ zu einer Bezugsebene sowie einer vorgegebenen Sollage festzustellen gestattet. Beispielsweise kann die Lage des Fahrzeugaufbaus dadurch ermittelt werden, daß die Beschleunigung am Fahrzeugaufbau ermittelt und nachfolgend eine Doppelintegration der Meßwerte der Beschleunigung zur Bestimmung der Lagekoordinaten erfolgt. Zusätzlich oder alternativ können mittels entsprechender Sensoren die Abstände zwischen Aufbau und Rädern bestimmt werden, um die Lage bzw. die Nick- und Wankwinkel des Aufbaus relativ zu einer Bezugsebene, z.B. der die Zentren oder die Aufstandspunkte der Räder enthaltenden Ebene, zu ermitteln. Grundsätzlich kann aber die Lageerkennung auch in anderer Weise durchgeführt werden.

Die Erfindung ist insbesondere bei Omnibussen, gegebenenfalls auch allgemein bei Lastkraftwagen, vorteilhaft.

**Patentansprüche**

1. Federungssystem für Fahrzeuge, mit zur Beeinflussung der Fahrzeuglage radweise unabhängig voneinander veränderbaren Stützkräften, zu deren Veränderung an den Fahrzeugrädern zugeordneten Dämpfern die Differenz zwischen den Dämpfungskoeffizienten in der Zug- und Druckstufe (radweise) gesteuert wird,
wobei die Dämpfer ausgebildet sind als doppeltwirkende hydraulische Teleskopstoßdämpfer mit einem Zylinder sowie einem darin verschiebbar geführten, den Zylinder unterteilenden Kolben mit einseitig angeordneter Kolbenstange und mit einer den kolbenstangenseitigen einen Raum des Zylinders mit dem auf der anderen Seite des Kolbens liegenden anderen Raum des Zylinders verbindenden Leitung, an der eine Rückschlagventilanordnung angeordnet ist, welche (im wesentlichen) nur eine Strömung vom anderen Raum in den einen Raum zuläßt, und mit einem Hydraulikreservoir, das mit dem einen Raum über eine steuerbare Servo- bzw. Proportionalventilanordnung und mit dem anderen Raum über eine weitere Rückschlagventilanordnung verbunden ist, welche (im wesentlichen) nur eine Strömung vom Reservoir in den anderen Raum zuläßt,
**dadurch gekennzeichnet,**
daß die Servo- bzw. Proportionalventilanordnung (14) zwei parallele Leitungszweige (13',13"), in denen jeweils ein steuerbares Ventil (14',14") liegt, mit einer dieselben steuernden Umschaltventilanordnung (16) aufweist, welche zwischen zwei Stellungen umschaltbar ist, in denen entweder der eine oder der andere Leitungszweig (13',13") geschlossen und der jeweils verbleibende Leitungszweig geöffnet ist.

**2.** Federungssystem nach Anspruch 1,
**dadurch gekennzeichnet,**
daß die Umschaltventilanordnung (16) einen kolbenartigen Steuerschieber (17) besitzt, welcher vom Druck im einen Zylinderraum (4) in Richtung seiner einen und vom Druck im anderen Zylinderraum in Richtung seiner anderen Stellung beaufschlagt wird.

**3.** Federungssystem nach einem der Ansprüche 1 oder 2,
**dadurch gekennzeichnet,**
daß die Ventile (14',14") unabhängig voneinander Steuerbar sind.

**4.** Federungssystem nach einem der Ansprüche 1 oder 2,
**dadurch gekennzeichnet,**
daß die Steuerbaren Ventile (14',14") derart miteinander gekoppelt sind, daß der Stromungswiderstand des Ventiles bzw. der Ventile (14') für den einen Leitungszweig (13') zunimmt, wenn der Strömungswiderstand des Ventiles bzw. der Ventile (14") für den anderen Zweig (13') vermindert wird.

**5.** Federungssystem nach einem der Ansprüche 1 bis 4,
**dadurch gekennzeichnet,**
daß eine den Dämpfern (26) zugeordnete Steuervorrichtung (28), welche die Lage bzw. die Nick- und Wankwinkel des Fahrzeugaufbaus registriert, ein Maß für die Wank- bzw. Nickwinkel ermittelt, indem die Differenz zwischen den zeitlichen Mittelwerten der Hubstellungen der Vorder- und Hinterräder (21 und 22 bzw. 23 und 24) bzw. die Differenz zwischen den Mittelwerten der Hubstellungen der Räder (21,23) auf einer Fahrzeugseite sowie der Räder (22,24) auf der anderen Fahrzeugseite bestimmt werden.

**Claims**

**1.** Suspension system for vehicles with supporting forces which can be varied independently of one another from wheel to wheel to influence the vehicle position and for varying which the difference between the damping coefficients in the tension and compression stage is controlled (from wheel to wheel) at shock absorbers assigned to the vehicle wheels, the shock absorbers being designed as double-acting hydraulic telescopic shock absorbers with a cylinder, with a piston guided displaceably therein, subdividing the cylinder and having a piston rod located on one side and a line which connects one space of the cylinder located on the same side as the piston rod to the other space of the cylinder located on the other side of the piston and on which is arranged a non-return valve arrangement which allows (essentially) only a flow from the other space into the first space, and with a hydraulic reservoir which is connected to one space via a controllable servo or proportional valve arrangement and to the other space via a further non-return valve arrangement which allows (essentially) only a flow from the reservoir into the other space, characterised in that the servo or proportional valve arrangement (14) has two parallel line branches (13', 13") in each of which is located a controllable valve (14', 14"), with a change-over valve arrangement (16) which controls the said line branches and which can be changed over between two positions, in which either one line branch or the other (13', 13") is closed and the particular line branch remaining is open.

**2.** Suspension system according to Claim 1, characterised in that the change-over valve arrangement (16) possesses a piston-like control slide (17) which is stressed towards one of its positions by the pressure in one cylinder space (4) and towards its other position by the pressure in the other cylinder space.

**3.** Suspension system according to one of Claims 1 or 2, characterised in that the valves (14', 14") are controllable independently of one another.

**4.** Suspension system according to one of Claims 1 or 2, characterised in that the controllable valves (14', 14") are coupled to one another, in such a way that the flow resistance of the valve or valves (14') for one line branch (13') increases when the flow resistance of the valve or valves (14") for the other branch (13') is reduced.

**5.** Suspension system according to one of Claims 1 to 4, characterised in that a control device (28) assigned to the shock absorbers (26) and recording the position or the pitch and roll angles of the vehicle body determines a measure of the roll and pitch angles by defining the difference between the average time values of the stroke positions of the front and rear wheels (21, 22 and 23, 24 respectively) or the difference between the average values of the stroke positions of the wheels (21, 23) on one vehicle side and of the wheels (22, 24) on the other vehicle side.

## Revendications

1. Système de suspension pour véhicules, où interviennent, pour influencer la position du véhicule, des forces de soutien réglables par roue indépendamment l'une de l'autre et dont le réglage est effectué par des amortisseurs associés aux roues du véhicule et dans lesquels est commandée ( par roue ) la différence entre les coefficients d'amortissement dans le sens de traction et dans le sens de compression les amortisseurs étant agencés sous la forme d'amortisseurs télescopiques hydrauliques à double effet, comportant un cylindre, un piston guidé de façon coulissante dans celui-ci, assurant sa division et pourvu d'une tige disposée d'un côté, ainsi qu'un conduit reliant la chambre du cylindre qui est située du côté de la tige de piston avec l'autre chambre du cylindre située de l'autre côté du piston, ce conduit étant pourvu d'un clapet antiretour qui permet (dans l'essentiel) seulement un écoulement de l'autre chambre vers la première chambre, et également un réservoir hydraulique qui est relié à la première chambre par l'intermédiaire d'un ensemble à servosoupapes ou soupapes proportionnelles pouvant être commandé, et à l'autre chambre par l'intermédiaire d'un autre clapet antiretour, qui autorise ( dans l'essentiel ) seulement un écoulement du réservoir vers l'autre chambre, caractérisé en ce que l'ensemble à servosoupapes ou soupapes proportionnelles (15) comporte deux conduits parallèles de dérivation (13', 13"), dans chacun desquels est disposée une soupape pouvant être commandée (14', 14"), en combinaison avec une soupape de commutation (16) assurant la commande des conduits de dérivation et pouvant être commutée entre deux positions où l'un des conduits de dérivation (13', 13") est fermé tandis que l'autre conduit de dérivation est ouvert.

2. Système de suspension selon la revendication 1, caractérisé en ce que la soupape de commutation (16) comporte un tiroir de distribution (17) en forme de piston, qui est sollicité par la pression régnant dans une chambre de cylindre (4) en direction d'une de ses positions, et par la pression régnant dans l'autre chambre de cylindre en direction de son autre position.

3. Système de suspension selon une des revendications 1 ou 2, caractérise en ce que les soupapes (14', 14") peuvent être commandées indépendamment l'une de l'autre.

4. Système de suspension selon une des revendications 1 ou 2, caractérisé en ce que les soupapes pouvant être commandées (14', 14") sont reliées entre elles de telle sorte que la résistance à l'écoulement de la soupape ou des soupapes (14') augmente pour un des conduits de dérivation (13') lorsque la résistance à l'écoulement de la soupape ou des soupapes (14") est réduite pour l'autre conduit de dérivation (13').

5. Système de suspension selon une des revendications 1 à 4, caractérisé en ce qu'un dispositif de commande (28), associé aux amortisseurs (26) et qui enregistre la position ou l'angle de tangage et de roulis de la caisse du véhicule, reçoit une mesure de l'angle de tangage ou de roulis au moyen d'une détermination de la différence entre les valeurs moyennes temporelles des positions verticales des roues avant et arrière (21 et 22 ou 23 et 24) ou bien de la différence entre les valeurs moyennes des positions verticales des roues (21, 23) situées d'un côté du véhicule et également des roues (22, 24) situées de l'autre côté du véhicule.

FIG. 1

FIG.2

FIG.3